# EUROPEAN PATENT APPLICATION

(11) **EP 4 365 239 A1**
(43) Date of publication of application: **08.05.2024**
(21) Application number: 22832785.4
(22) Date of filing: 13.06.2022
(51) Int. Cl.: C08L 83/07, C08K 3/04, C08K 3/22, C08K 3/36, C08K 5/205, C08K 5/29, C08L 83/05

(54) **ADDITION-CURABLE SILICONE RUBBER COMPOSITION AND CURED SILICONE RUBBER PRODUCT**

(30) Priority: 01.07.2021 JP 2021110296
(71) Applicant: SHIN-ETSU CHEMICAL CO., LTD., Tokyo 1000005 (JP)
(72) Inventor: HARA, Tatsuei, Annaka-shi, Gunma 379-0224 (JP); KATO, Nobu, Annaka-shi, Gunma 379-0224 (JP); UBUKATA, Shigeru, Annaka-shi, Gunma 379-0224 (JP)
(74) Representative: Sonnenhauser, Thomas Martin
(86) International application number: PCT/JP2022/023581
(87) International publication number: WO 2023/276628

(57) **Abstract**

The present invention provides addition-curable silicone rubber composition including: (A) 100 parts by mass of alkenyl-group-containing organopolysiloxane having two or more alkenyl groups bonded to a silicon atom within one molecule; (B) 0.2 to 20 parts by mass of organohydrogenpolysiloxane containing two or more hydrogen atoms bonded to a silicon atom within one molecule; (C) catalytic amount of a platinum-based catalyst; (D) 0.01 to 5.0 parts by mass of thermally-dissociative blocked (poly)isocyanate; and (E) 0.01 to 10.0 parts by mass of a heat resistance-imparting agent. The above can provide addition-curable silicone rubber composition and silicone rubber cured material which can produce a cured material having a low compressive set even under high temperature conditions of 200°C or more.

## Description

### TECHNICAL FIELD

The present invention relates to addition-curable silicone rubber composition and a silicone rubber cured material obtained by curing the composition.

### BACKGROUND ART

Silicone rubber is excellent in heat resistance, cold resistance, safety, electrical insulation, weather resistance, and durability, and therefore, is used in wide range of fields such as automotive hoses, gasket materials, electrical and electronic parts such as copy machine rolls and microwave oven packing, construction materials, fiber coating materials, etc.

In these years, with miniaturization and higher output of automobile engines, parts around engines are required to have high heat resistance. Method to further enhance heat resistance of silicone composition includes adding metal oxides such as iron oxide, titanium oxide, cerium oxide, etc., as a heat resistance improver. This makes it possible to obtain a silicone rubber cured material having small physical property change even under higher temperature conditions.

When silicone rubber is used as a gasket such as an O-ring, packing, etc., a low compressive set is required to prevent seal leakage. For decreasing a compressive set, in general, rubber molded by thermal curing needs a long period of secondary vulcanization under high temperature further.

Patent Documents 1 and 2 disclose silicone composition containing metal oxide (titanium oxide and iron oxide in Patent Document 1, and hydrated cerium oxide and hydrated zirconium oxide in Patent Document 2). Adding the metal oxide is reported to be able to enhance heat resistance of silicone rubber composition, but there is no discussion about a compressive set.

Patent Document 3 discloses that addition-curable silicone rubber composition with a triazole-based compound added can reduce a compressive set without the secondary vulcanization. However, it is known to be difficult to improve a compressive set of the addition-curable silicone rubber composition containing a triazole-based compound under high temperature conditions such as 200°C or higher.

Patent Documents 4 and 5 disclose silicone rubber composition containing blocked polyisocyanate. Patent Document 4 discloses such composition has good adhesive properties with fabric and the adhesive properties can be maintained even after prolonged storage even under a high-temperature and high-humidity condition. Patent Document 5 determines constitution and content of thermally-dissociative blocked polyisocyanate composition, and discloses imparting flame retardance as a characteristic. However, merely by adding small amount of blocked polyisocyanate composition, a compressive set, under a temperature condition of 200°C or higher, of silicone rubber composition containing such blocked polyisocyanate composition is not improved.

### CITATION LIST

### PATENT LITERATURE

Patent Document 1: JP 2016-518461 A
Patent Document 2: JP 2014-031408 A
Patent Document 3: JP 2017-165931 A
Patent Document 4: JP 2019-006956 A
Patent Document 5: JP 2020-070357 A

### SUMMARY OF INVENTION

### TECHNICAL PROBLEM

The present invention has been made in view of the above-described problem. An object of the present invention is to provide addition-curable silicone rubber composition which can produce a cured material having a low compressive set even in high temperature conditions of 200°C or more and silicone rubber cured material.

### SOLUTION TO PROBLEM

To solve the problem, the present invention provides addition-curable silicone rubber composition comprising:
(A) 100 parts by mass of alkenyl-group-containing organopolysiloxane having two or more alkenyl groups bonded to a silicon atom within one molecule;
(B) 0.2 to 20 parts by mass of organohydrogenpolysiloxane containing two or more hydrogen atoms bonded to a silicon atom within one molecule;
(C) catalytic amount of a platinum-based catalyst;
(D) 0.01 to 5.0 parts by mass of thermally-dissociative blocked (poly)isocyanate; and
(E) 0.01 to 10.0 parts by mass of a heat resistance-imparting agent.

Such addition-curable silicone rubber composition can produce a cured material having a low compressive set even under high temperature conditions of 200°C or more.

In the present invention, (D) the thermally-dissociative blocked (poly)isocyanate is preferably a reaction product of a thermally-dissociative blocking agent and at least one of diisocyanate selected from the group consisting of aliphatic diisocyanate and alicyclic diisocyanate.

Such component (D) has a big advantageous effect of improving a compressive set and is preferable.

Further, in the present invention, the heat resistance-imparting agent (E) is preferably at least one selected from the group consisting of iron oxide, titanium oxide doped with metal oxide, and carbon.

Such component (E) has a big advantageous effect of improving a compressive set and is preferable.

Furthermore, in the present invention, the addition-curable silicone rubber composition further comprises (F) an acetylene alcohol compound or a compound in which an alcoholic hydroxy group of the acetylene alcohol compound is modified with silane or siloxane, wherein amount of acetylene bonds is 1 to 500 mol based on 1 mol of platinum atoms of the component (C) .

Such addition-curable silicone rubber composition can control curing initiating time and is preferable.

Further, in the present invention, the addition-curable silicone rubber composition further comprises preferably 5 to 100 parts by mass of reinforcing silica fine powder (G) based on 100 parts by mass of the component (A).

Such addition-curable silicone rubber composition can enhance rubber strength and is preferable.

In this event, the component (G) is preferably fumed silica having a specific surface area of 50 m²/g or more by a BET method.

Such component (G) can enhance rubber strength more surely and is preferable.

Further, the present invention provides a silicone rubber cured material, which is a cured material of the addition-curable silicone rubber composition.

Such cured material has a low compressive set even under high temperature conditions of 200°C or more.

### ADVANTAGEOUS EFFECTS OF INVENTION

The present invention can provide addition-curable silicone rubber composition which can be a silicone rubber cured material having a low compressive set over a long period even under high temperature conditions such as 200°C, and silicone rubber cured material obtained by curing the addition-curable silicone rubber composition.

### DESCRIPTION OF EMBODIMENTS

As described above, it is desired to develop addition-curable silicone rubber composition which can be cured material having a low compressive set even under high temperature conditions of 200°C or more, and silicone rubber cured material.

The inventors of the present invention conducted extensive research about the above problems, and found that, in addition-curable silicone rubber composition including (A) alkenyl-group-containing organopolysiloxane having two or more alkenyl groups bonded to a silicon atom within one molecule, (B) organohydrogenpolysiloxane containing two or more hydrogen atoms bonded to a silicon atom within one molecule, (C) a platinum-based catalyst, (D) thermally-dissociative blocked (poly)isocyanate, and (E) a heat resistance-imparting agent, by combination of components (D) and (E), it is possible to obtain addition-curable silicone rubber composition which can produce cured material having a low compressive set even under high temperature conditions of 200°C or more, and then completed the present invention.

That is, the present invention relates to addition-curable silicone rubber composition includes (A) 100 parts by mass of alkenyl-group-containing organopolysiloxane having two or more alkenyl groups bonded to a silicon atom within one molecule, (B) 0.2 to 20 parts by mass of organohydrogenpolysiloxane containing two or more hydrogen atoms bonded to a silicon atom within one molecule, (C) catalytic amount of a platinum-based catalyst, (D) 0.01 to 5.0 parts by mass of thermally-dissociative blocked (poly)isocyanate, and (E) 0.01 to 10.0 parts by mass of a heat resistance-imparting agent.

Hereinafter, the present invention will be described in detail, but the present invention is not limited thereto.

### [Addition-curable Silicone Rubber Composition]

The inventive addition-curable silicone rubber composition includes the following components (A), (B), (C), (D), and (E). Further, besides these components, components (F) and (G) can be included. Hereinafter, components each are explained.

### (A) Alkenyl-group-containing Organopolysiloxane

Component (A) alkenyl-group-containing organopolysiloxane having two or more alkenyl groups bonded to a silicon atom within one molecule is a main agent (a base polymer) of the present compounds. A compound represented by the following average composition formula (1) can be used as component (A).

R¹ₐSiO_{(4-a)/2} (1)

In the formula (1), R¹ is independently a monovalent hydrocarbon group having 1 to 10 carbon atoms, preferably 1 to 8 carbon atoms, provided that two or more of all R¹ contained in one molecule are alkenyl group having 2 to 10 carbon atoms and "a" is a positive number in a range of 1.5 to 2.8, preferably 1.8 to 2.5, more preferably 1.95 to 2.05.

In this event, a monovalent hydrocarbon group represented by R¹ and having 1 to 10 carbon atoms can include a alkyl group such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, a decyl group, etc.; an aryl group such as a phenyl group , a tolyl group, a xylyl group, a naphthyl group, etc.; an aralkyl group such as a benzyl group, a phenylethyl group, a phenylpropyl group, etc.; an alkenyl group such as a vinyl group, an allyl group, a propenyl group, an isopropenyl group, a butenyl group, a hexenyl group, a cyclohexenyl group, an octenyl groups, etc., but more than 90 mol% of all R¹, particularly all of R¹ other than alkenyl group is preferably a methyl group.

Further, at least two of R¹ needs to be an alkenyl group having 2 to 10 carbon atoms. Among them, an alkenyl group preferably has 2 to 8 carbon atoms, more preferably 2 to 6 carbon atoms, and a vinyl group is particularly preferable.

In the alkenyl-group-containing organopolysiloxane, an alkenyl group is preferably contained 1.0×10⁻⁶ to 5.0×10⁻³ mol/g, particularly 1.0×10⁻⁵ to 2.0×10⁻³ mol/g. When the content is 1.0×10⁻⁶ to 5.0×10⁻³ mol/g, rubber-like material can be obtained. The alkenyl group may bond to a silicon atom at the end of molecular chain, to a silicon atom in the middle of the molecular chain, or to both.

Structure of the alkenyl-group-containing organopolysiloxane basically has a linear structure, in which both ends of the molecular chain are blocked with a triorganosiloxy groups and the main chain consists of repeating diorganosiloxane units, but it may also have a partially branched structure, a cyclic structure, etc.

Regarding the molecular weight of the component (A), an average degree of polymerization is 1,500 or less, usually 100 to 1,500, preferably 150 to 1,000. When the average degree of polymerization is 100 to 1,500, rubber-like material can be obtained and it has good formability.

In the present invention, the average degree of polymerization is number-average degree of polymerization based on a gel permeation chromatography (GPC) under the following conditions using polystyrene as a standard substance.

### [Measurement Conditions]

Developing solvent: toluene
Flow rate: 0.6 mL/min
Detector: differential refractive index detector (RI)
Column: TSK Guardcolumn SuperH-H
TSKgel SuperH5000 (6.0mmI.D.×15cm×1)
TSKgel SuperH4000 (6.0mmI.D.×15cm×1)
TSKgel SuperH3000 (6.0mmI.D.×15cm×1)
   (All columns are manufactured by Tosoh Corporation)
Column temperature: 40°C
Sample injection amount: 50 µL (a toluene solution having a concentration of 0.5 mass%)

For component (A), it is possible to use concurrently one, two, or more kind of compounds which are different each other in structure or polymerization degree, as long as component (A) is alkenyl-group-containing organopolysiloxane having two or more alkenyl groups bonded to a silicon atom within one molecule, such as having alkenyl groups connected to silicon atoms at the both ends of molecular chain.

### (B) Organohydrogenpolysiloxane

Component (B) is organohydrogenpolysiloxane containing at least two, preferably three or more, hydrogen atoms bonded to a silicon atom (hydrosilyl group) within one molecule. The hydrosilyl group in the molecule is crosslinked with an alkenyl group connected to a silicon atom of component (A) by hydrosilylation reaction. That is, the organohydrogenpolysiloxane acts as a curing agent (a crosslinking agent) to cure addition-curable silicone rubber composition.

For component (B) organohydrogenpolysiloxane, a compound represented by following an average composition formula (2) and containing at least two, preferably three or more, more preferably 3 to 100, particularly preferably 4 to 50, hydrogen atoms bonded to a silicon atom (hydrosilyl group) within one molecule.

R²_{b}H_{c}SiO_{(4-b-c)/2} (2)

In the formula, R² is independently a monovalent hydrocarbon group having 1 to 10 carbon atoms, preferably 1 to 8 carbon atoms. "b" is a positive number in a range of 0.7 to 2.1, "c" is a positive number in a range of 0.001 to 1.0, and "b+c" is a positive number in a range of 0.8 to 3.0.

R² represents a monovalent hydrocarbon group includes an alkyl group having 1 to 10 carbon atoms, an aryl group having 6 to 10 carbon atoms, an aralkyl group having 7 to 10 carbon atoms, etc. Specific or preferable examples for each can include the same as those for R¹.

Further, "b" is a positive number in a range of 0.7 to 2.1, preferably 0.8 to 2.0. "c" is a positive number in a range of 0.001 to 1.0, preferably 0.01 to 1.0. "b+c" is a positive number in a range of 0.8 to 3.0, preferably 1.0 to 2.5. A structure of the organohydrogenpolysiloxane may be linear, cyclic, branched, or three-dimensional network.

In the organohydrogenpolysiloxane, content of the hydrosilyl group is preferably 0.0005 to 0.020 mol/g, particularly 0.001 to 0.017 mol/g. When contents of the hydrosilyl group is 0.0005 mol/g or more, crosslinking is sufficient. When contents of the hydrosilyl group is 0.020 mol/g or less, the organohydrogenpolysiloxane is stable.

In this event, those which are liquid at room temperature (25°C) and have 2 to 300 carbon atoms (or polymerization degree) in one molecule, particularly 3 to 150, above all 4 to 100 carbon atoms, are preferably used. A hydrogen atom connected to a silicon atom may be located at the end of the molecular chain, in the middle of the molecular chain (non-terminal), or at both.

Examples of component (B) organohydrogenpolysiloxane include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogen cyclopolysiloxane, a methylhydrogensiloxane/dimethylsiloxane cyclic copolymer, methylhydrogenpolysiloxane with both molecular chain ends blocked with trimethylsiloxy groups, a dimethylsiloxane/methylhydrogensiloxane copolymer with both molecular chain ends blocked with trimethylsiloxy groups, dimethylpolysiloxane with both molecular chain ends blocked with dimethylhydrogensiloxy groups, a dimethylsiloxane/methylhydrogensiloxane copolymer with both molecular chain ends blocked with dimethylhydrogensiloxy groups, a methylhydrogensiloxane/diphenylsiloxane copolymer with both molecular chain ends blocked with trimethylsiloxy groups, a methylhydrogensiloxane/diphenylsiloxane/dimethylsiloxane copolymer with both molecular chain ends blocked with trimethylsiloxy groups, a methylhydrogensiloxane/methylphenylsiloxane/dimethylsilo xane copolymer with both molecular chain ends blocked with trimethylsiloxy groups, a methylhydrogensiloxane/dimethylsiloxane/diphenylsiloxane copolymer with both molecular chain ends blocked with dimethylhydrogensiloxy groups, a methylhydrogensiloxane/dimethylsiloxane/methylphenylsilo xane copolymer with both molecular chain ends blocked with dimethylhydrogensiloxy groups, a copolymer consisting of (CH₃)₂HSiO_{1/2} units, (CH₃)₃SiO_{1/2} units, and SiO_{4/2} units, a copolymer consisting of (CH₃)₂HSiO_{1/2} units and SiO_{4/2} units, a copolymer consisting of (CH₃)₂HSiO_{1/2} units, SiO_{4/2} units, and (C₆H₅)SiO_{3/2} units, compounds in which part or all of the methyl groups in these exemplified compounds are substituted with other alkyl groups, phenyl groups, or the like.

Component (B) organohydrogenpolysiloxane may be polyvalent aromatic ring-containing organohydrogenpolysiloxane, in which a part (usually a part of the oxygen atom forming the siloxane bond) of the siloxane skeleton (-Si-O-Si-) constituting the molecule of compounds exemplified above include a hydrocarbon skeleton containing an aromatic ring (for example, phenylene skeleton, bisphenylene skeleton, bis(phenylene)ether skeleton, bis(phenylene)methane skeleton, 2,2-bis(phenylene)propane skeleton, 2,2-bis(phenylene)hexafluoropropane skeleton, etc.) being usually divalent to tetravalent.

Component (B) organohydrogenpolysiloxane is contained in an amount of 0.2 to 20 parts by mass, preferably 0.3 to 10 parts by mass, based on 100 parts by mass of sum amount of component (A). Molar ratio (hydrosilyl group / alkenyl group) of hydrogen atoms connected with a silicon atom (hydrosilyl group) in component (B) organohydrogenpolysiloxane to total amount of alkenyl group connected with a silicon atom in components (A) and (B) (especially in component (A)) preferably 0.8 to 10, more preferably 1.0 to 5. When the molar ratio is 0.8 or more, composition is cured sufficiently (sufficient crosslinking density), and obtained rubber does not give sticky feeling. When the molar ratio is 10 or less, no bubble is observed in a silicone rubber molded article and it does not become difficult to release material from a mold.

### (C) Platinum-based Catalyst

Component (C) includes platinum-based catalysts such as platinum black, platinum chloride, chloroplatinic acid, reaction products of chloroplatinic acid and monohydric alcohol, complexes of chloroplatinic acid and olefins, platinum bisacetoacetate, etc.

The platinum-based catalyst is blended in catalytic amount, and in general its blended content as platinum metal (mass conversion) can be 0.5 to 500 ppm, particularly around 1 to 200 ppm, on a basis of mass of component (A). Component (C) platinum-based catalyst may be used alone, or two or more of them may be used concurrently.

### (D) Thermally-dissociative Blocked (poly)isocyanate

Component (D) thermally-dissociative blocked (poly)isocyanate is a component to improve a compressive set of cured material of the inventive addition-curable silicone rubber composition, by adding with component (E) a heat resistance-imparting agent.

Component (D) thermally-dissociative blocked (poly)isocyanate is preferably a blocked isocyanate or a blocked polyisocyanate obtained from a reaction product of a thermally-dissociative blocking agent and one or more diisocyanates selected from the group consisting of aliphatic diisocyanate and alicyclic diisocyanate. Further, the blocked isocyanate is more preferably blocked isocyanate obtained from a reaction product of the diisocyanate and a thermally-dissociative blocked (poly)isocyanate in an amount of 1 mol or more per 1 mol of NCO groups of the diisocyanate. Examples of aliphatic diisocyanate include butane diisocyanate, pentane diisocyanate, and hexamethylene diisocyanate. Examples of the alicyclic diisocyanate include isophorone diisocyanate, toluene diisocyanate, diphenylmethane diisocyanate, etc. Among these, hexamethylene diisocyanate and toluene diisocyanate are preferable, because they are easily available industrially.

Aliphatic diisocyanate and alicyclic diisocyanate may be used as a monomer, or as an oligomer such as the urethanized, the ureated, the allophanated, the biuretated, and the isocyanurated. For example, they may be used as polyisocyanate, in which chain length is extended by reaction with a diol substance, or which is grown three-dimensionally by reaction with a triol substance. In order to stabilize the effect of decreasing a compression set after thermal dissociation of blocks of the thermally-dissociative blocked (poly)isocyanate for a long time, it is preferable to use an oligomer and a polymer. The aliphatic diisocyanate and the alicyclic diisocyanate may be used alone or in combination of two or more kinds concurrently.

For the thermally-dissociative blocking agent, compounds selected from oxime-based compounds, alcohol-based compounds, acid amide-based compounds, acid imide-based compounds, phenol-based compounds, amine-based compounds, active methylene-based compounds, imidazole-based compounds, pyrazole-based compounds, and triazole-based compounds, may be preferably used alone or in combination.

Thermal decomposition temperature of the thermally-dissociative blocked (poly)isocyanate depends on a thermally-dissociative blocking agent, but is 100 to 300°C for example. Thermal curing temperature of the addition-curable silicone rubber composition is 40 to 230°C, and heating conditions (primary vulcanization) is about 3 seconds to 160 minutes. Therefore, the compound is preferably difficult to thermally decompose when stored at room temperature and during primary vulcanization, the blocks is preferably thermally disassociated during secondary vulcanization or when used as a molded product.

Blended amount of thermally-dissociative blocked (poly)isocyanate is 0.01 to 5.0 parts by mass, preferably 0.01 to 1.0 parts by mass, based on 100 parts by mass of component. When less than 0.01 parts by mass, effect of improving a compressive set is difficult to be obtained. When more than 5.0 parts by mass, curing may be delayed. The thermally-dissociative blocked polyisocyanate may be used alone or in combination of two or more kinds concurrently. When two or more kinds are used concurrently, the blended amount may be within the above range as a total.

### (E) Heat Resistance-imparting Agent

Component (E) a heat resistance-imparting agent is a component to remarkably improve a compressive set of silicone rubber cured material at heigh temperature by adding with the component (D). Examples of the component (E) include cerium oxide, cerium hydroxide, iron oxide (for example, yellow iron oxide), titanium oxide (e.g., titanium oxide doped with metal oxide), carbon, etc. Among these, iron oxide, titanium oxide doped with metal oxide, and carbon has great effect on improving a compressive set and preferable. These may be used alone or in combination of two or more kinds concurrently.

The blended amount of component (E) is 0.01 to 10.0 parts by mass, preferably 0.01 to 5.0 parts by mass, more preferably 0.01 to 1.0 parts by mass, based on 100 parts by mass of component (A). When the amount is less than 0.01 parts, it is difficult to obtain effect of improving a compressive set. When the amount is more than 10.0 parts by mass, physical properties may be reduced.

### (F) Reaction Control Agent

The inventive addition-curable silicone rubber composition may be added with an acetylene alcohol compound or a compound in which an alcoholic hydroxy group of the acetylene alcohol compound is modified with silane or siloxane, as component (F) besides components (A) to (E). Component (F) functions as a reaction control agent against component (C) platinum-based catalyst, and can control curing initiating time by its amount to be added.

Component (F) an acetylene alcohol compound may have both an ethynyl group and a hydroxy group in the same molecule, but it is preferable that an ethynyl group and a hydroxy group is connected to the same carbon. Specific examples include the following compounds.

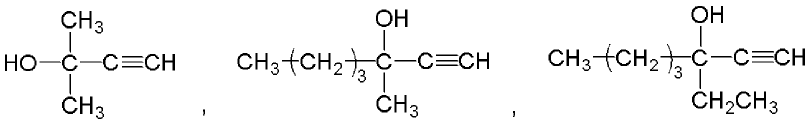

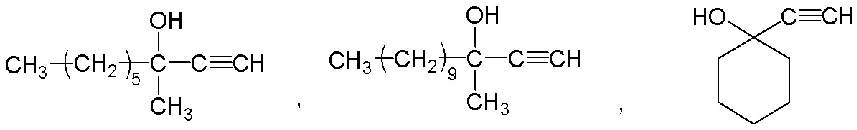

Further, the compound in which an alcoholic hydroxy group of the acetylene alcohol compound is modified with silane or siloxane is connected with silane or siloxane in a form in which a hydroxy group of the acetylene alcohol compound is transformed to a Si-O-C bond. Examples include the following compounds.

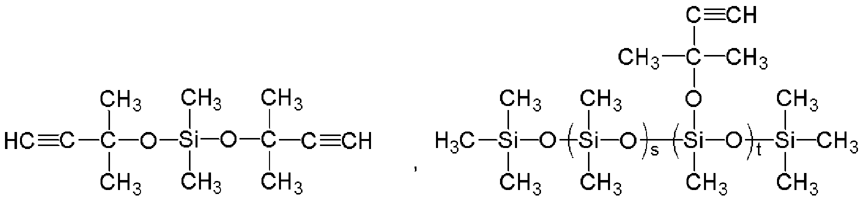

In the above formula, "s" is an integer in a range of 0 to 50, preferably 3 to 20, and "t" is an integer in a range of 1 to 50, preferably 3 to 20.

Regarding blended amount of component (F), its acetylene bond is 1 to 500 mol based on 1 mol of component (C) platinum atom, preferably 1 to 300 mol, more preferably 2 to 200 mol. When the amount is 1 to 500 mol, and it is possible to obtain good curability and a sufficient pot life for operation. Component (F) may be used alone or in combination of two or more kinds concurrently. When two or more kinds is used concurrently, the blended amount may be within the above range as a total.

### (G) Reinforcing Silica Fine Powder

The inventive addition-curable silicone rubber composition preferably contains reinforcing silica fine powder as component (G). For reinforcing silica fine powder, the kind of silica is not particularly limited, the silica may be those which can used as a reinforcing agent for a usual rubber. Reinforcing silica fine powder which is used for conventional silicone rubber composition can be used, but reinforcing silica fine powder having a specific surface area of 50 m²/g or more by a BET method is preferably used. Precipitated silica (wet silica), fumed silica (dry silica), pyrogenic silica, etc., which have a specific surface area of 50 to 400 m²/g by BET method, notably 100 to 350 m²/g, are suitably used especially, and improve rubber strength, and therefore, fumed silica is preferable. The reinforcing silica fine powder may be silica fine powder the surface of which has been subjected to hydrophobization treatment with a surface treatment agent such as (usually hydrolysable) organic silicon compounds including chlorosilane, alkoxysilane, and organosilazane for example. On that occasion, the silica fine powder may be directly subjected to surface-hydrophobization treatment by a surface treatment agent beforehand in a powder state, or may be added with a surface treatment agent in kneading with silicone oil (for example, the alkenyl group-containing organopolysiloxane of the component (A)) to be subjected to surface-hydrophobization treatment.

As a treatment method, a well-known technique may be used for the surface treatment. For example, the untreated silica fine powder and a surface treatment agent are put into a kneading machine sealed at normal pressure or a fluidized bed, and mixed at room temperature or under heat treatment (with heating) in the presence of inert gas as necessary. In some cases, a catalyst (hydrolysis accelerator, etc.) may be used to promote the surface treatment. By drying after kneading, surface-treated silica fine powder can be produced. The blending amount of the surface treatment agent may be an amount calculated from a coating area of the surface treatment agent or more.

Specific examples of the surface treatment agent include: organic silicon compound such as silazanes such as hexamethyldisilazane, etc.; silane coupling agents such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, vinyltris(methoxyethoxy)silane, trimethylchlorosilane, dimethyldichlorosilane, divinyldimethoxysilane, chloropropyltrimethoxysilane, etc.; polymethylsiloxane, organohydrogenpolysiloxane, etc. Hydrophobic silica fine powder may be used by using these agents for the surface treatment. As the surface treatment agent, in particular, silane coupling agents or silazanes are preferable. Component (G) silica fine powder may be used alone, or in combination of two or more kinds concurrently.

The blended amount of the component (G) is preferably 5 to 100 parts by mass based on 100 parts by mass of component (A).

### [Method for Preparation of Addition-curable Silicone Rubber Composition]

The inventive addition-curable silicone rubber composition can be obtained only by mixing the above components (A) to (E) and optional components, uniformly at normal temperature. However, when component (G) is included, component (G) is preferably subjected to heat treatment with a surface treatment agent, water, and all or part of component (A) using a planetary mixer or a kneader at a temperature of 100 to 200°C for 1 to 4 hours, and then remaining other components may be added and mixed after cooling down to a room temperature, to obtain the inventive addition-curable silicone rubber composition.

### [A Method for Forming of Addition-curable Silicone Rubber Composition / Silicone Rubber Cured Material]

As a method for forming and curing the addition-curable silicone rubber composition, a routine method can be adopted, but the best method suitable for a purpose can be selected from injection molding, transfer molding, injection molding, compression molding, etc., as a forming method. As the curing conditions, heat treatment (primary vulcanization) conditions at 40 to 230°C for about 3 seconds to 160 minutes can be adopted. Further, as occasion demands, secondary vulcanization (post curing) at 40 to 230°C for about 10 minutes to 24 hours may be performed arbitrarily.

Cured material obtained by curing the inventive addition-curable silicone rubber composition has preferably a compressive set of 80% or less after 230°C × 125 hours at compressibility rate of 25%. Materials having this value or less can be used for an O-ring or packing preferably.

In the present invention, the compressive set is measured according to test method described in JIS K 6262:2013. The standard designates following two test pieces to be used for measurement.

**[Table 1]**

| shape | Dimensions of main parts (mm) | |
|---|---|---|
| | Diameter | Thickness |
| Large test piece | 29.0 ± 0.5 | 12.5 ± 0.5 |
| Small test piece | 13.0 ± 0.5 | 6.3 ± 0.3 |

A compressive set of the cured material of the inventive addition-curable silicone rubber composition is measured by using these two kinds of test pieces. The compressive set is preferably 80% or less for each test peace. The compressive set is obtained by the following formula. compressive set = [{(Thickness of original test piece) - (Thickness of test piece after heating)} / (Thickness of original test piece)] × 100(%)

Such a compressive set can be achieved by using composition in which components (D) and (E) is blended according to the aforementioned compounding ratio and mixed uniformly with the addition-curable silicone rubber composition containing components (A) to (C).

### EXAMPLE

Hereinafter, the present invention will be specifically described with reference to Examples and Comparative Examples. However, the present invention is not limited thereto. In the following Examples, average polymerization degree is the number-average degree of polymerization according the aforementioned method.

### (Preparation Example 1)

60 parts of dimethylpolysiloxane (A1) with both molecular ends blocked with dimethylvinylsiloxy groups and having an average polymerization degree of 750, 40 parts of fumed silica (G1) (Aerosil 300, manufactured by Nippon Aerosil Co., Ltd.) having a specific surface area of 300 m²/g by BET method, 8.0 parts of hexamethyldisilazane, and 2.0 parts of water, were mixed at room temperature for 60 minutes. Then, the temperature was raised to 150°C, and the mixture was stirred for 4 hours. Thereafter, the mixture was added with 30 parts of dimethylpolysiloxane (A1) further, mixed until homogeneous, and cooled to obtain silicone rubber base A.

### (Example 1)

100 parts of silicone rubber base A was added with: 15.8 parts of dimethylpolysiloxane (A2) with both molecular chain ends blocked with dimethylvinylsiloxy groups and having an average degree of polymerization of 220; 1.2 parts of dimethylpolysiloxane (A3) with an average degree of polymerization of 200 and with both molecular chain ends blocked with trimethylvinylsiloxy groups, in which 10 mol% of the methyl groups in the side chain (i.e. a monovalent group or atom bonded to the silicon atom in the diorganosiloxane unit constituting the main chain, hereinafter the same) are vinyl groups; 2.5 parts of methylhydrogenpolysiloxane (B1) with both molecular chain ends blocked with trimethylsiloxy groups as a crosslinking agent and having a hydrosilyl group in the side chain (a dimethylsiloxane/methylhydrogensiloxane copolymer with both molecular chain ends blocked with trimethylsiloxy groups, having degree of polymerization: 99, amount of hydrosilyl groups: 0.00517 mol/g); 0.5 parts of blocked (poly)isocyanate (D1) derived from toluene diisocyanate (TDI) (Meikanate TP-10, manufactured by Meisei Chemical Works, Ltd.); 0.37 parts of AEROXIDE TiO₂ PF2 (E1) manufactured by Evonik Corporation as a heat resistance-imparting agent titanium oxide; and 0.03 parts of ethynylcyclohexanol (F1) as a reaction control agent (acetylene / Pt atoms = 38 mol/mol), and the mixture was stirred for 15 minutes. Next, the mixture was added with 0.08 parts of a toluene solution (C1) (1% by mass of platinum atoms) of a complex of platinum and 1,3-divinyl-1,1,3,3-tetramethyldisiloxane, and stirred for 30 minutes to obtain a uniform addition-curable silicone rubber composition A.

Note that, in this composition, the molar ratio of the total amount of hydrosilyl groups to the total amount of vinyl groups (hydrosilyl group / vinyl group) of the entire composition is 2.2.

Table 2 shows the results of measuring the compression set of the cured material obtained by mixing addition-curable silicone rubber composition A and following press curing at 150°C for 15 minutes. A compression set was measured at a compressibility rate of 25% based on the method described in JIS K 6262:2013.

### (Example 2)

D1 in Example 1 was replaced with 0.05 parts of blocked (poly)isocyanate (D2) (NBP-211, manufactured by Meisei Chemical Works, Ltd.) derived from hexamethylene diisocyanate (HDI). Except for this, addition-curable silicone rubber composition B was prepared in the same manner as Example 1, and was evaluated in a similar manner to Example 1. The results are shown in Table 2.

### (Example 3)

D1 in Example 1 was replaced with 0.05 parts of blocked isocyanate (TDI-BTZ, D3), in which toluene diisocyanate was used as the isocyanate and benzotriazole was used as the blocking agent. Except for this, addition-curable silicone rubber composition C was prepared in the same manner as Example 1, and was evaluated in a similar manner to Example 1. The results are shown in Table 2.

### (Example 4)

E1 in Example 1 was replaced with Bengala 130ED (E2) manufactured by Toda Pigment Co., Ltd., for iron oxide as a heat resistance-imparting agent. Except for this, addition-curable silicone rubber composition E was prepared in the same manner as Example 1, and was evaluated in a similar manner to Example 1. The results are shown in Table 2.

### (Example 5)

E1 in Example 1 was replaced with Denka Black (E3) manufactured by Denka Company Limited, for carbon as a heat resistance-imparting agent. Except for this, addition-curable silicone rubber composition F was prepared in the same manner as Example 1, and was evaluated in a similar manner to Example 1. The results are shown in Table 2.

### (Comparative Example 1)

Except for not containing blocked (poly)isocyanate (D1) used in Example 1, addition-curable silicone rubber composition G was prepared in the same manner as Example 1, and was evaluated in a similar manner to Example 1. The results are shown in Table 2.

### (Comparative Example 2)

Except for not containing AEROXIDE TiO₂ PF2 (E1) manufactured by Evonik Corporation for titanium oxide used in Example 1 as a heat resistance-imparting agent, addition-curable silicone rubber composition H was prepared in the same manner as Example 1, and was evaluated in a similar manner to Example 1. The results are shown in Table 2.

### (Comparative Example 3)

D1 in Example 1 was replaced with 0.05 parts of toluene diisocyanate (TDI, D4). Except for this, addition-curable silicone rubber composition I was prepared in the same manner as Example 1, and was evaluated in a similar manner to Example 1. The results are shown in Table 2.

### (Comparative Example 4)

D1 in Example 1 was replaced with 0.05 parts of hexamethylene diisocyanate (HDI, D5). Except for this, addition-curable silicone rubber composition J was prepared in the same manner as Example 1, and was evaluated in a similar manner to Example 1. The results are shown in Table 2.

### (Comparative Example 5)

D1 in Example 1 was replaced with 0.05 parts of benzotriazole (BTZ, D6). Except for this, addition-curable silicone rubber composition K was prepared in the same manner as Example 1, and was evaluated in a similar manner to Example 1. The results are shown in Table 2.

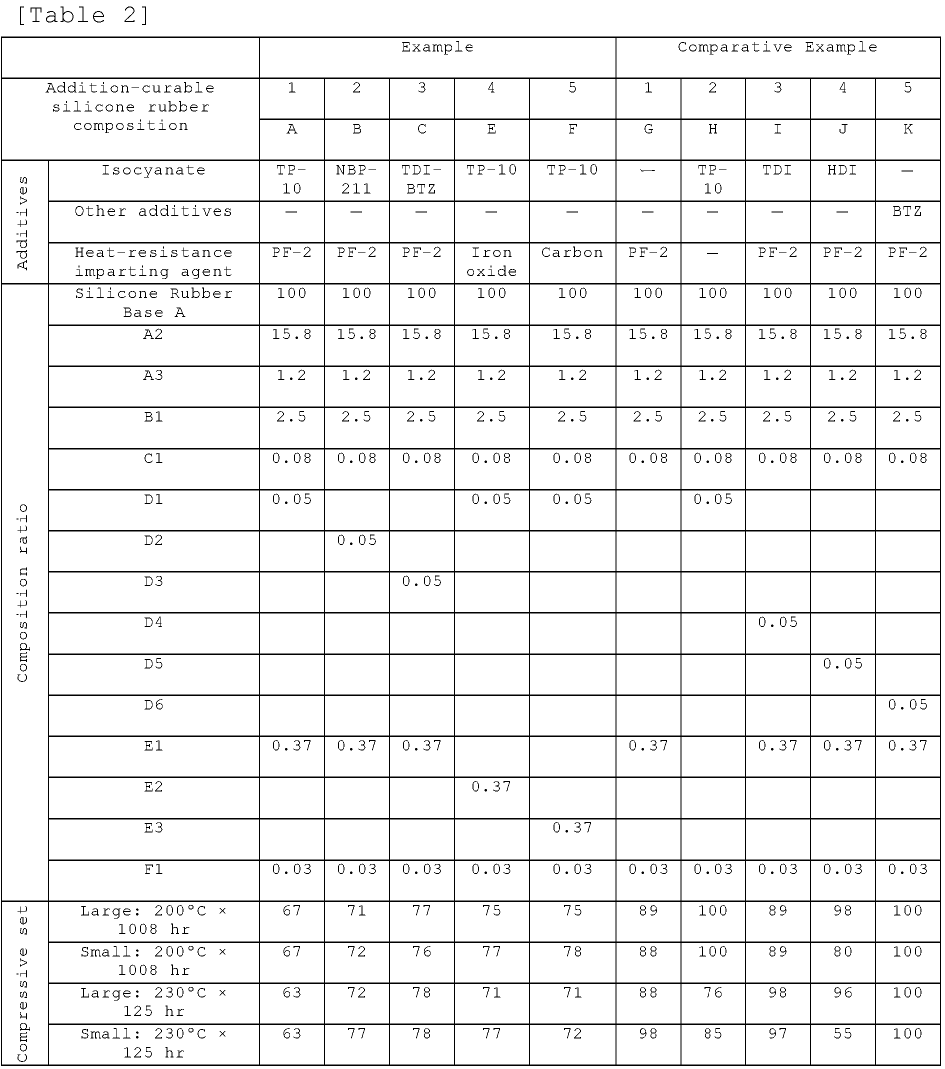

As shown in Table 2, in Examples 1 to 5 using the inventive addition-curable silicone rubber composition, both large test pieces and small test pieces were cured materials which have a low compressive set even under high temperature conditions of 200°C or more.

On the other hand, in Comparative Examples 1 and 2 where components (D) and (E) are not contained concurrently and Comparative Examples 3 and 5 where component (D) is not thermally-dissociative blocked (poly)isocyanate, cured materials does not have a low compressive set under high temperature conditions of 200°C or more. In Comparative Example 4 where component (D) is not thermally-dissociative blocked (poly)isocyanate, small test pieces were cured materials which have a low compressive set even under high temperature conditions of 200°C or more, but large test pieces were not cured materials which have a low compressive set under high temperature conditions of 200°C or more.

It should be noted that the present invention is not limited to the above-described embodiments. The embodiments are examples, and any examples that have substantially the same feature and demonstrate the same functions and effects as those in the technical concept disclosed in claims of the present invention are included in the technical scope of the present invention.

## Claims

1. Addition-curable silicone rubber composition comprising:
(A) 100 parts by mass of alkenyl-group-containing organopolysiloxane having two or more alkenyl groups bonded to a silicon atom within one molecule;
(B) 0.2 to 20 parts by mass of organohydrogenpolysiloxane containing two or more hydrogen atoms bonded to a silicon atom within one molecule;
(C) catalytic amount of a platinum-based catalyst;
(D) 0.01 to 5.0 parts by mass of thermally-dissociative blocked (poly)isocyanate; and
(E) 0.01 to 10.0 parts by mass of a heat resistance-imparting agent.

2. The addition-curable silicone rubber composition according to claim 1,
wherein (D) the thermally-dissociative blocked (poly)isocyanate is a reaction product of a thermally-dissociative blocking agent and at least one of diisocyanate selected from the group consisting of aliphatic diisocyanate and alicyclic diisocyanate.

3. The addition-curable silicone rubber composition according to claim 1 or 2,
wherein (E) the heat resistance-imparting agent is at least one selected from the group consisting of iron oxide, titanium oxide doped with metal oxide, and carbon.

4. The addition-curable silicone rubber composition according to any one of claims 1 to 3,
further comprising (F) an acetylene alcohol compound or a compound in which an alcoholic hydroxy group of the acetylene alcohol compound is modified with silane or siloxane, wherein amount of acetylene bonds is 1 to 500 mol based on 1 mol of platinum atoms of the component (C).

5. The addition-curable silicone rubber composition according to any one of claims 1 to 4,
further comprising 5 to 100 parts by mass of (G) reinforcing silica fine powder based on 100 parts by mass of the component (A).

6. The addition-curable silicone rubber composition according to claim 5,
wherein the component (G) is fumed silica having a specific surface area of 50 m²/g or more by a BET method.

7. A cured material of the addition-curable silicone rubber composition according to any one of claims 1 to 6.
